# EUROPÄISCHE PATENTANMELDUNG

(11) **EP 4 726 201 A1**
(43) Veröffentlichungstag der Anmeldung: **15.04.2026**
(21) Anmeldenummer: 25203310.5
(22) Anmeldetag: 19.09.2025
(51) Int. Cl.: F02M 37/34, B01D 27/08, B01D 29/11, F02M 37/42

(54) **KRAFTSTOFFFILTER**

(30) Priorität: 11.10.2024 DE 102024129393
(71) Anmelder: Mahle International GmbH, 70376 Stuttgart (DE)
(72) Erfinder: Ostafe, Alexandru Bogdan, 300062 Timisoara (RO); Häußermann, Uli, 70734 Fellbach (DE); Jadaneantu, Sorin, 307272 Timis (RO)

(57) **Zusammenfassung**

Die Erfindung betrifft einen Kraftstofffilter (1) zum Filtern eines Kraftstoffs für ein Kraftfahrzeug mit einem Gehäuse (2) und einem Filterelement (3). Das Filterelement (3) umfasst einen Filterkörper (7) und eine koaxial in dem Filterkörper (7) angeordnete Tragzarge (9). Die Tragzarge (9) umfasst wenigstens eine axial durchströmbare Nut (20), sodass das Filterelement (3) zwischen der Tragzarge (9) und dem Filterkörper (7) axial durchströmbar ist.

## Beschreibung

Die Erfindung betrifft einen Kraftstofffilter zum Filtern eines Kraftstoffs für ein Kraftfahrzeug mit einem Gehäuse und einem Filterelement nach dem Oberbegriff des Anspruchs 1.

Ein Kraftstofffilter weist üblicherweise ein Gehäuse und ein in dem Gehäuse angeordnetes Filterelement auf. Das Filterelement umfasst dabei einen Filterkörper aus einem Filtermaterial und teilt das Gehäuse in eine Reinseite und eine Rohseite auf. Der zu filternde Kraftstoff strömt dann in dem Gehäuse von der Rohrseite auf die Reinseite über das Filtermaterial des Filterkörpers und wird gefiltert. Öfters ist das Filterelement hohlzylindrisch ausgebildet und weist einen Innenraum auf. In dem Innenraum des Filterelements können weitere Elemente des Kraftstofffilters - wie beispielweise ein Auslassstutzen - angeordnet sein. Wird das Filterelement radial von außen nach innen durchströmt, so können die Elemente in dem Innenraum das Durchströmen des Kraftstoffs beeinträchtigen.

Die Aufgabe der Erfindung ist es daher, für einen Kraftstofffilter der gattungsgemäßen Art eine verbesserte oder zumindest alternative Ausführungsform anzugeben, bei der die beschriebenen Nachteile überwunden werden.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Der erfindungsgemäße Kraftstofffilter ist zum Filtern eines Kraftstoffs für ein Kraftfahrzeug ausgelegt. Der Kraftstofffilter weist dabei ein Gehäuse und ein in dem Gehäuse zu seiner Längsmittelachse koaxial angeordnetes Filterelement auf. Das Filterelement umfasst dabei einen hohlzylindrischen Filterkörper und eine hohlzylindrische radial durchströmbare Tragzarge. Ferner umfasst das Filterelement zwei axial bzw. senkrecht zur Längsmittelachse ausgerichtete Endscheiben, wobei der Filterkörper und die Tragzarge koaxial zueinander angeordnet und zwischen den Endscheiben angeordnet sind. Die Tragzarge ist dabei innerhalb des Filterkörpers angeordnet und der Filterkörper ist radial nach innen durch die Tragzarge abgestützt. Die Tragzarge weist zudem dem Filterkörper zugewandt wenigstens eine axial durchströmbare Nut auf, sodass das Filterelement zwischen der Tragzarge und dem Filterkörper durch die wenigstens eine Nut hindurch axial durchströmbar ist.

Durch die Nut in der Tragzarge kann der Kraftstoff in dem Filterelement unabhängig von weiteren innerhalb des Filterelements angeordneten Elementen - wie beispielweise einem Auslassstutzen - axial durchströmt werden. Dadurch kann die Filterkapazität des Kraftstofffilters erhöht werden und die Druckunterschiede innerhalb des Filterkörpers bzw. eines von dem Filterkörper nach außen begrenzten Innenraums des Filterelements ausgeglichen werden.

Bei einer möglichen Ausführungsform des Kraftstofffilters kann die Tragzarge wenigstens eine die Längsmittelachse umlaufende Verbindungsrippe und wenigstens eine axial ausgerichtete Tragrippe aufweisen. Dabei können die wenigstens eine Verbindungsrippe und die wenigstens eine Tragrippe miteinander verbunden sein. Die wenigstens eine Nut kann dabei in der wenigstens einen Verbindungsrippe ausgebildet sein. Die wenigstens eine Nut kann in der wenigstens einen Verbindungsrippe dem Filterkörper zugewandt ausgebildet sein und radial nach innen ausgerichtet sein.

Bei dieser Ausführungsform kann vorgesehen sein, dass entlang einer die Längsmittelachse umlaufenden Umfangsrichtung eine Erstreckung aller in der wenigstens einen Verbindungsrippe ausgebildeten Nuten maximal 50% eines Gesamtumfangs der wenigstens einen Verbindungsrippe beträgt. Dadurch kann sichergestellt werden, dass der Filterkörper trotz den Nuten in der wenigstens einen Verbindungsrippe durch die Tragzarge radial nach innen noch ausreichend gut abgestützt ist. Dadurch kann insbesondere ein Risiko des Zusammenbrechens des Filterelements reduziert werden.

Bei dieser Ausführungsform kann vorgesehen sein, dass die Tragzarge mehrere axial zueinander beabstandete Verbindungsrippen aufweist. Dabei ist in wenigstens zwei der Verbindungsrippen jeweils die wenigstens eine Nut ausgebildet. Die wenigstens eine Nut in der einen Verbindungsrippe und die wenigstens eine Nut in der anderen axial benachbarten Verbindungsrippe können dabei in eine die Längsmittelachse umlaufenden Umfangsrichtung zueinander versetzt ausgebildet sein. Insbesondere können die Nuten in den axial benachbarten Verbindungsrippen in einem Schachmuster zueinander angeordnet sein. Dadurch kann sichergestellt werden, dass der Filterkörper entlang der Längsmittelachse zumindest an einigen Verbindungsrippen abgestützt ist. Dadurch kann insbesondere ein Risiko des Zusammenbrechens des Filterelements reduziert werden.

Bei dieser Ausführungsform kann vorgesehen sein, dass die wenigstens eine Verbindungsrippe außerhalb der wenigstens einen Nut dem Filterkörper zugewandt wenigstens eine radial nach innen ausgerichtete Ausnehmung aufweist. Der Filterkörper kann dabei als ein Faltkörper mit mehreren axial ausgerichteten Falten ausgebildet sein. Dann kann wenigstens eine Falte des Filterkörpers in der wenigstens einen Ausnehmung liegen und dadurch in eine die Längsmittelachse umlaufende Umfangsrichtung fixiert sein. Insbesondere kann dadurch eine Verschiebung der einzelnen Falten des Filterkörpers in die Umfangsrichtung verhindert werden und dadurch das Filterelement stabilisiert werden.

Bei einer möglichen Ausführungsform des Kraftstofffilters kann das Filterelement ein Dichtungsrohr aufweisen. Das Dichtungsrohr kann dabei innerhalb der Tragzarge und zu der Tragzarge koaxial angeordnet sein. Die Tragzarge kann dann radial nach innen durch das Dichtungsrohr abstützt sein. Das Dichtungsrohr kann mit der einen Endscheibe des Filterelements, bevorzugt stoffschlüssig, verbunden sein und von der anderen Endscheibe axial beabstandet sein. Das Dichtungsrohr kann insbesondere zum sicheren Trennen der Reinseite und der Rohseite des Kraftstofffilter vorgesehen sein und zusätzlich auch die Tragzarge abstützen.

Bei dieser Ausführungsform kann vorgesehen sein, dass alle Nuten der Tragzarge im Bereich zwischen dem Filterkörper und dem Dichtungsrohr ausgebildet sind. Dadurch kann ein Abströmen des Kraftstoffs aus dem Bereich zwischen der Tragzarge und dem Dichtungsrohr ermöglicht werden und Druckunterschiede innerhalb eines in dem Filterkörper ausgebildeten Innenraum ausgeglichen werden.

Bei dieser Ausführungsform kann vorgesehen sein, dass der Kraftstofffilter einen hohlzylindrischen Auslassstutzen aufweist. Der Auslassstutzen kann dann koaxial und zumindest bereichsweise in dem Filterelement angeordnet sein. Der Auslassstutzen kann zudem an einem axialen Längsende des Gehäuses aus dem Gehäuse nach außen führen und durch das Dichtungsrohr des Filterelements axial hindurchgehen. Das Dichtungsrohr kann dann an dem Auslassstutzen umlaufend und fluiddicht anliegen. Insbesondere kann das Dichtungsrohr von dem Längsende, an dem der Auslassstutzen nach außen führt, axial beabstandet an dem Auslassstutzen anliegen. Die Reinseite und die Rohseite können dann entsprechend von dem Längsende, an dem der Auslassstutzen nach außen führt, axial beabstandet voneinander getrennt sein. Dadurch kann beim Wechseln des Filterelements das nicht gefilterte Kraftstoff nicht auf die Reinseite gelangen und ein Verschmutzen des gefilterten Kraftstoffs mit dem nicht gefilterten Kraftstoff beim Wechseln des Filterelements ausgeschlossen werden.

Im Zusammenhang mit der vorliegenden Erfindung sind die Begriffe "axial" und "radial" und "koaxial" und "umlaufend" stets auf die Längsmittelachse des Gehäuses bezogen. In dem Kraftstofffilter können das Gehäuse und/oder der Filterkörper und/oder die Tragzarge und/oder das Dichtungsrohr und/oder der Auslassstutzen koaxial zueinander ausgerichtet sein. Die Formulierung "innerhalb eines hohlzylindrischen Elements" ist mit der Formulierung "in einem innerhalb des hohlzylindrischen Elements ausgebildeten Hohlraums" gleichbedeutend.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittansicht eines erfindungsgemäßen Kraftstofffilters;
- Fig. 2: eine Schnittansicht eines Filterelements des erfindungsgemäßen Kraftstofffilters;
- Fig. 3 bis 5: eine Ansicht und vergrößerte Teilansichten einer Tragzarge des Filterelements des erfindungsgemäßen Kraftstofffilters;
- Fig. 6: eine teilweise Schnittansicht des Filterelements des erfindungsgemäßen Kraftstofffilters;
- Fig. 7: eine Draufsicht auf die Tragzarge des Filterelements des erfindungsgemäßen Kraftstofffilters.

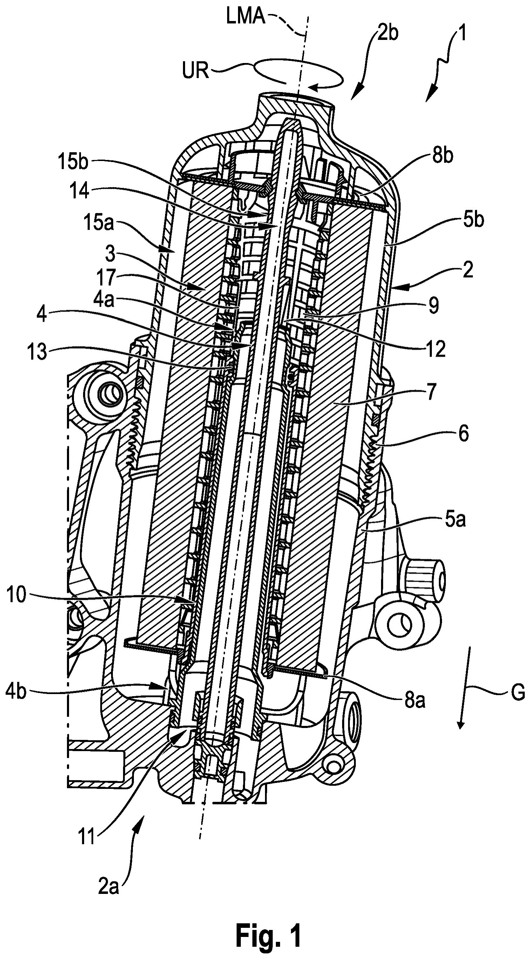

Fig. 1 zeigt eine Schnittansicht eines erfindungsgemäßen Kraftstofffilters 1 zum Filtern eines Kraftstoffs für ein Kraftfahrzeug. Der Kraftstofffilter 1 umfasst dabei ein Gehäuse 2, ein hohlzylindrisches Filterelement 3 und einen hohlzylindrischen Auslassstutzen 4. In Fig. 1 ist der Kraftstofffilter 1 bezüglich der Erdanziehungskraft G betriebsgerecht ausgerichtet.

Das Gehäuse 2 weist dabei ein erstens Längsende 2a und ein zweites Längsende 2b, die bezüglich einer Längsmittelachse LMA des Gehäuses 2 axial zueinander beabstandet sind. Das Gehäuse 2 umfasst zudem ein erstes Gehäuseteil 5a mit dem ersten Längsende 2a und ein zweites Gehäuseteil 5b mit dem zweiten Längsende 2b, die an einer umlaufenden Verbindungsstelle 6 miteinander lösbar verbunden - hier verschraubt - sind.

Das Filterelement 3 umfasst einen hohlzylindrischen Filterkörper 7, eine erste Endscheibe 8a und eine zweite Endscheibe 8b, eine hohlzylindrische Tragzarge 9 und ein Dichtungsrohr 10. Das Dichtungsrohr 10 ist innerhalb der Tragzarge 9 und die Tragzarge 9 ist innerhalb des Filterkörpers 8 angeordnet. Dabei sind der Filterkörper 7, die Tragzarge 9 und das Dichtungsrohr 10 koaxial zueinander und axial zwischen den senkrecht zur Längsmittelachse LMA ausgerichteten Endscheiben 8a und 8b angeordnet. Der Filterkörper 7 und die Tragzarge 9 erstrecken sich dabei über eine gesamte axiale Höhe des Filterkörpers 7 und sind mit den Endscheiben 8a und 8b verbunden. Dabei sind der Filterkörper 7 radial nach innen an der Tragzarge 9 und die Tragzarge 9 radial nach innen an dem Dichtungsrohr 10 abgestützt. Das Dichtungsrohr 10 ist mit der ersten Endscheibe 8a verbunden - beispielweise verschweißt - und erstreckt sich etwa über eine axiale Mitte des Filterkörpers 7. Das Filterelement 3 ist in dem Gehäuse 2 koaxial angeordnet, sodass der Filterkörper 7, die Tragzarge 9 und das Dichtungsrohr 10 koaxial zu dem Gehäuse 2 ausgerichtet sind.

Der Auslassstutzen 4 ist bereichsweise innerhalb des Dichtungsrohrs 10 des Filterelements 3 angeordnet und koaxial zu dem Gehäuse 2 und zu dem Filterelement 3 ausgerichtet. Der Auslassstutzen 4 ist an seinem ersten axialen Ende 4a mit einem an dem ersten Längsende 2a ausgebildeten Auslass 11 des Gehäuses 2 fluidisch verbunden und ragt an seinem zweiten axialen Ende 4b aus dem Dichtungsrohr 10 heraus. An dem zweiten Ende 4b weist der Auslassstuten 4 eine Einlassöffnung 12 auf, die aus einem Innenraum 17 des Filterelements 3 in den Auslassstutzen 4 führt. Das Dichtungsrohr 10 liegt dabei außenseitig an dem Auslassstutzen 4 an, sodass eine umlaufende Dichtungsstelle 13 zwischen dem Dichtungsrohr 10 bzw. dem Filterelement 3 und dem Auslassstutzen 4 ausgebildet ist. Innerhalb des Auslassstutzens 4 ist zudem ein Entlüftungsrohr 14 des Kraftstofffilters 1 koaxial angeordnet. Das Entlüftungsrohr 14 verbindet dabei den Auslass 11 des Gehäuses 2 mit der Umgebung an dem zweiten Längsende 2b des Gehäuses 2.

Der Kraftstofffilter 1 ist zum Filtern des Kraftstoffs ausgelegt. Dabei strömt der Kraftstoff auf eine Rohseite 15a des Gehäuses 2 und durch den Filterkörper 7 des Filterelements 3 hindurch auf eine Reinseite 15b des Gehäuses 2. Die Rohseite 15a des Gehäuses 2 umfasst hier einen das Filterelement 3 außenseitig umlaufenden Bereich und einen zwischen dem ersten Längsende 2a des Gehäuses 2 und der Endscheibe 8a des Filterelements 3 angeordneten Bereich. Ferner umfasst hier die Rohseite 15a einen Bereich, der zwischen dem Dichtungsrohr 10 und dem Auslassstutzen 4 angeordnet ist und sich axial von der ersten Endscheibe 8a bis zur Dichtungsstelle 13 erstreckt.

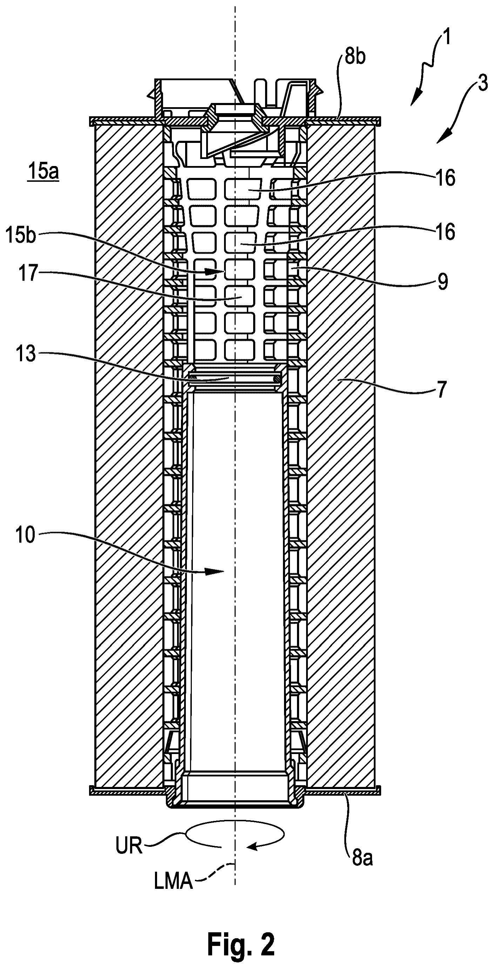

Fig. 2 zeigt eine Schnittansicht des Filterelements 3 des erfindungsgemäßen Kraftstofffilters 1. Wie hier besonders gut erkennbar ist, erstreckt sich das Dichtungsrohr 10 nicht über die gesamte axiale Höhe des Filterkörpers 7.

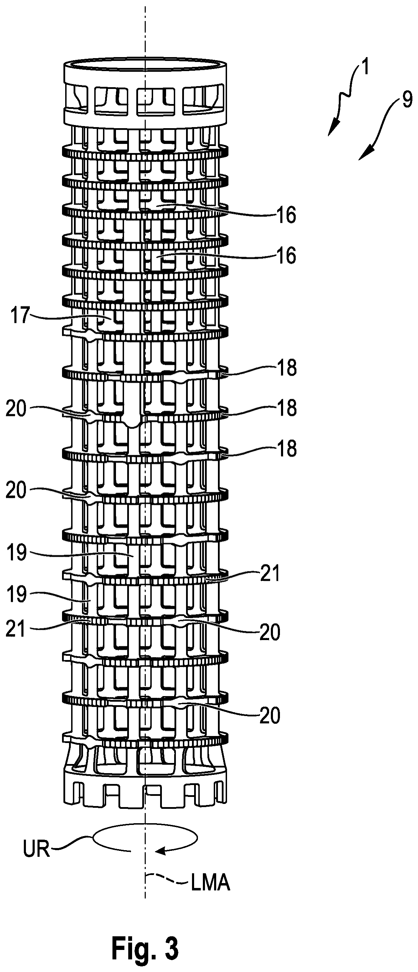

Fig. 3 zeigt eine Ansicht der Tragzarge 9 des Filterelements 3 des erfindungsgemäßen Kraftstofffilters 1. Wie in Fig. 3 besonders gut erkennbar ist, umfasst die Tragzarge 9 mehrere umlaufende Verbindungsrippen 18 und mehrere Tragrippen 19. Die Verbindungsrippen 18 sind dabei um die Längsmittelachse LMA umlaufend ausgebildet und zueinander axial beabstandet angeordnet. Die Verbindungsrippen 18 sind also ringförmig ausgebildet. Die Tragrippen 19 sind axial zueinander ausgerichtet und in eine die Längsmittelachse LMA umlaufende Umfangsrichtung UR zueinander beabstandet angeordnet. Die Verbindungsrippen 18 und die Tragrippen 19 sind miteinander verbunden, sodass die Tragzarge 9 den Filterkörper 7 und das Filterelement 3 insgesamt stabilisiert. Dabei liegen die Verbindungsrippen 18 radial außen an den Tragrippen 19 und sind zu dem Filterkörper 7 radial benachbart angeordnet. Zwischen den Verbindungsrippen 18 und den Tragrippen 19 sind Öffnungen 16 geformt. Durch die Öffnungen 16 kann der in dem Filterkörper 7 gefilterte Kraftstoff in den Innenraum 17 des Filterelements 3 gelangen.

An den Verbindungsrippen 18 sind mehrere Nuten 20 geformt. Die Nuten 20 sind in den Verbindungsrippen 18 zu dem Filterkörper 7 zugewandt ausgebildet und radial nach innen gerichtet. Dadurch sind die Nuten 20 und das Filterelement 3 zwischen dem Filterkörper 7 und der Tragzarge 9 axial durchströmbar. Die Nuten 20 sind dabei im Bereich der Tragzarge 9 ausgebildet, der radial gegenüber dem Dichtungsrohr 10 liegt. Der Kraftstoff, der gegenüber dem Dichtungsrohr 10 in den Innenraum 17 einströmt, kann dadurch axial zu der Einlassöffnung 12 des Auslassstutzens 4 geleitet werden. Dadurch kann insbesondere der Druck im Bereich zwischen der Tragzarge 9 und dem Dichtungsrohr 10 reduziert werden.

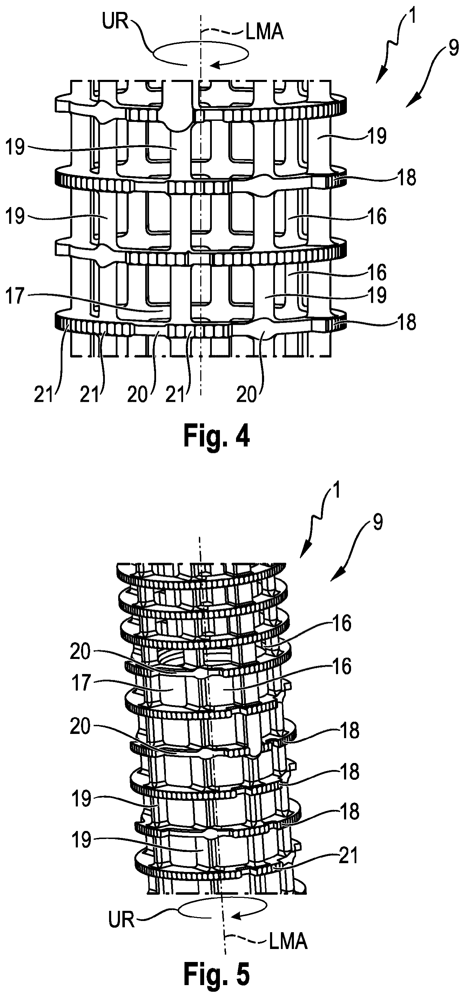

In Fig. 4 und in Fig. 5 sind Teilansichten der Tragzarge 9 des Filterelements 3 des erfindungsgemäßen Kraftstofffilters 1 gezeigt. Wie in Fig. 4 und Fig. 5 besonders gut erkennbar ist, sind die Nuten 20 in den axial zueinander benachbarten Verbindungsrippen 18 in Umfangsrichtung UR zueinander verschoben und hier im Schachmuster angeordnet. Durch die Verschiebung der Nuten 20 in Umfangsrichtung UR kann jede Falte des Filterkörpers 7 entlang der Längsmittelachse LMA an der Tragzarge 9 abgestützt werden. Zwischen den Nuten 20 sind an den Verbindungsrippen 18 zudem mehrere Ausformungen 21 ausgebildet, die zusätzlich eine Verschiebung der Falten des Filterkörpers 7 in die Umfangsrichtung UR verhindern. Demnach kann durch die Nuten 20 einerseits das axiale Abströmen des Kraftstoffs ermöglicht und andererseits durch die Ausnehmungen 21 das Filterelement 3 stabilisiert werden.

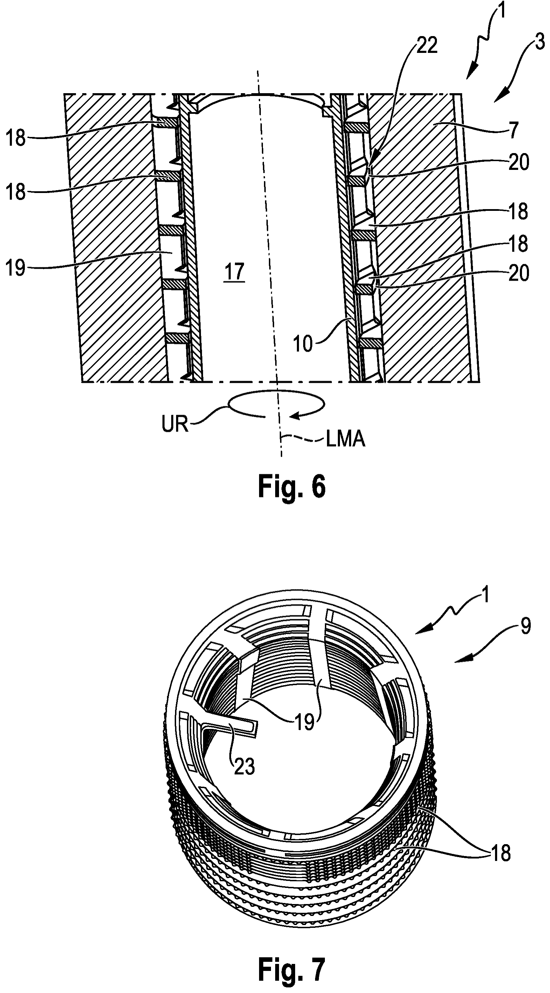

Fig. 6 zeigt eine teilweise Schnittansicht des Filterelements 3 des erfindungsgemäßen Kraftstofffilters 1. In Fig. 6 ist besonders gut erkennbar, dass durch die Nuten 20 zwischen dem Filterkörper 7 und der Tragzarge 9 axial durchströmbare Strömungskanäle 22 ausgebildet sind.

Fig. 7 zeigt eine Draufsicht auf die Tragzarge 9 des Filterelements 3 des erfindungsgemäßen Kraftstofffilters 1. In Fig. 7 ist ein Führungselement 23 der Tragzarge 9 erkennbar. Bezugnehmend auf Fig. 1 gleitet das Führungselement 23 beim Einsetzen des Filterelements 3 in das Gehäuse 2 entlang des Auslassstutzens 4 und greift in eine komplementäre Ausnehmung des Auslassstutzens 4 in einer vordefinierten Drehlage in der Art eines Schlüssel-Schloss-Prinzips ein. Dadurch kann das Filterelement 3 in dem Gehäuse 2 in der definierten Drehlage bezüglich des Längsmittelachse LMA und drehfest positioniert werden.

## Patentansprüche

1. Kraftstofffilter (1) für ein Kraftfahrzeug,
- wobei der Kraftstofffilter (1) ein Gehäuse (2) und ein in dem Gehäuse (2) zu seiner Längsmittelachse (LMA) koaxial angeordnetes Filterelement (3) aufweist,
- wobei das Filterelement (3) einen hohlzylindrischen Filterkörper (7) und eine hohlzylindrische radial durchströmbare Tragzarge (9) aufweist,
- wobei das Filterelement (3) zwei Endscheiben (8a, 8b) aufweist und der Filterkörper (7) und die Tragzarge (9) koaxial zueinander ausgerichtet und zwischen den Endscheiben (8a, 8b) angeordnet sind,
- wobei die Tragzarge (9) innerhalb des Filterkörpers (7) angeordnet ist und der Filterkörper (7) radial nach innen durch die Tragzarge (9) abgestützt ist, und
- wobei die Tragzarge (9) dem Filterkörper (7) zugewandt wenigstens eine axial durchströmbare Nut (20) aufweist, sodass das Filterelement (3) zwischen der Tragzarge (9) und dem Filterkörper (7) durch die wenigstens eine Nut (20) hindurch axial durchströmbar ist.

2. Kraftstofffilter (1) nach Anspruch 1,
**dadurch gekennzeichnet,**
- **dass** die Tragzarge (9) wenigstens eine die Längsmittelachse (LMA) umlaufende Verbindungsrippe (18) und wenigstens eine axial ausgerichtete Tragrippe (19) aufweist,
- **dass** die wenigstens eine Verbindungsrippe (18) und die wenigstens eine Tragrippe (19) miteinander verbunden sind, und
- **dass** die wenigstens eine Nut (20) in der wenigstens einen Verbindungsrippe (19) ausgebildet ist.

3. Kraftstofffilter (1) nach Anspruch 2,
**dadurch gekennzeichnet,**
**dass** entlang einer die Längsmittelachse (LMA) umlaufenden Umfangsrichtung (UR) eine Erstreckung aller in der wenigstens einen Verbindungsrippe (18) ausgebildeten Nuten (20) maximal 50% eines Gesamtumfangs der wenigstens einen Verbindungsrippe (18) beträgt.

4. Kraftstofffilter (1) nach Anspruch 2 oder 3,
**dadurch gekennzeichnet,**
- **dass** die Tragzarge (9) mehrere axial zueinander beabstandete Verbindungsrippen (18) aufweist, wobei in wenigstens zwei der Verbindungsrippen (18) jeweils die wenigstens eine Nut (20) ausgebildet ist, und
- **dass** die wenigstens eine Nut (20) in der einen Verbindungsrippe (18) und die wenigstens eine Nut (20) in der anderen axial benachbarten Verbindungsrippe (18) in eine die Längsmittelachse (LMA) umlaufenden Umfangsrichtung (UR) zueinander versetzt ausgebildet sind.

5. Kraftstofffilter (1) nach Anspruch 4,
**dadurch gekennzeichnet,**
**dass** die Nuten (20) in den axial benachbarten Verbindungsrippen (18) in einem Schachmuster zueinander angeordnet sind.

6. Kraftstofffilter (1) nach einem der Ansprüche 2 bis 5,
**dadurch gekennzeichnet,**
- **dass** die wenigstens eine Verbindungsrippe (18) außerhalb der wenigstens einen Nut (20) dem Filterkörper (7) zugewandt wenigstens eine radial nach innen ausgerichtete Ausnehmung (20) aufweist, und
- **dass** der Filterkörper (7) als ein Faltkörper mit mehreren axial ausgerichteten Falten ausgebildet ist, wobei wenigstens eine seiner Falten in der wenigstens einen Ausnehmung (20) liegt und dadurch in eine die Längsmittelachse (LMA) umlaufende Umfangsrichtung (UR) fixiert ist.

7. Kraftstofffilter (1) nach einem der vorangehenden Ansprüche,
**dadurch gekennzeichnet,**
- **dass** das Filterelement (3) ein Dichtungsrohr (10) aufweist und das Dichtungsrohr (10) innerhalb der Tragzarge (9) und zu der Tragzarge (9) koaxial angeordnet ist, und
- **dass** die Tragzarge (9) radial nach innen durch das Dichtungsrohr (10) abstützt ist.

8. Kraftstofffilter (1) nach Anspruch 7,
**dadurch gekennzeichnet,**
**dass** das Dichtungsrohr (10) mit der einen Endscheibe (8a) des Filterelements (3), bevorzugt stoffschlüssig, verbunden ist und von der anderen Endscheibe (8b) axial beabstandet ist.

9. Kraftstofffilter (1) nach Anspruch 7 oder 8,
**dadurch gekennzeichnet,**
**dass** alle Nuten (20) der Tragzarge (9) im Bereich zwischen dem Filterkörper (7) und dem Dichtungsrohr (10) ausgebildet sind.

10. Kraftstofffilter (1) nach einem der Ansprüche 7 bis 9,
**dadurch gekennzeichnet,**
- **dass** der Kraftstofffilter (1) einen hohlzylindrischen Auslassstutzen (4) aufweist und der Auslassstutzen (4) koaxial und zumindest bereichsweise in dem Filterelement (3) angeordnet ist,
- **dass** der Auslassstutzen (4) an einem axialen Längsende (2a) des Gehäuses (2) aus dem Gehäuse (2) nach außen führt und durch das Dichtungsrohr (10) des Filterelements (3) axial hindurchgeht, und
- **dass** das Dichtungsrohr (10) an dem Auslassstutzen (4) umlaufend und fluiddicht anliegt.
